# EUROPEAN PATENT APPLICATION

(11) **EP 3 279 816 A1**
(43) Date of publication of application: **07.02.2018**
(21) Application number: 17785272.0
(22) Date of filing: 10.03.2017
(51) Int. Cl.: G06F 17/30

(54) **DATA ANALYSIS PROCESSING METHOD, APPARATUS, COMPUTER DEVICE, AND STORAGE MEDIUM**

(30) Priority: 19.04.2016 CN 201610243600
(71) Applicant: Ping An Technology (Shenzhen) Co., Ltd., Shenzhen, Guangdong 518000 (CN)
(72) Inventor: ZHU, Min, Shenzhen, Guangdong 518000 (CN)
(74) Representative: Manitz Finsterwald Patentanwälte PartmbB
(86) International application number: PCT/CN2017/076293
(87) International publication number: WO 2017/181786

(57) **Abstract**

Disclosed is a method for data analyzing and processing, comprising: entering a pre-established new data analysis and processing project; accessing a functional node in the new data analysis and processing project; reading a target file and importing data; generating a data calculation and processing script according to a requirement information; and calling the data calculation and processing script, and analyzing and processing the data at the functional node.

## Description

### CROSS-REFERENCE TO RELATED APPLICATIONS

The present application claims all benefits from Chinese Patent Application No. 201610243600X, filed on April 19, 2016, in the State Intellectual Property Office of China, entitled "Method, Apparatus, Computing Device and Storage Medium for Data Analyzing and Processing", the entire content of which is hereby incorporated herein by reference.

### FIELD

The present disclosure relates to data processing, and more particularly, to a method, apparatus, computing device and storage medium for data analyzing and processing.

### BACKGROUND

ETL (Extract-Transform-Load), is configured to describe the process of extracting, transforming and loading data from source terminal to destination terminal, the common ETL tool may include Datastage®, Kettle® and OWB® (Oracle Warehouse Builder) and so on. The traditional ETL tool does not have the function for performing the script, and it is also unable to execute the existing data analytical functions and the third party extension database, and it is unable to analyze and process the complicated data involved scientific computing.

Additionally, the traditional EFL tool such as Kettle, is merely able to process streaming data. During data processing, a node for loading data, and a next node for transforming and cleaning data, may be needed, and then the data having been processed may flow into an ending node, the data needs flowing through a series of nodes. The data processing is too complicated, and the efficiency of processing is low.

### SUMMARY

On the basis of various embodiments of the present disclosure, a method, apparatus, computing device and storage medium are provided.

A method for data analyzing and processing, including:
entering a pre-established new data analysis and processing project;
accessing a functional node in the new data analysis and processing project;
reading a target file and importing data; and
generating a data calculation and processing script according to a requirement information; and
calling the data calculation and processing script, and analyzing and processing the data at the functional node.

An apparatus for data analyzing and processing, including:
an entering module configured to enter a pre-established new data analysis and processing project;
an accessing module configured to access a functional node in the new data analysis and processing project;
a reading module configured to read a target file and importing a data;
a script generating module configured to generate a data calculation and processing script according to a requirement information; and
a calling module configured to call the data calculation and processing script, and analyze and process the data at the functional node.

A computing device, including a memory and a processor, wherein, computer executable instructions are stored in the memory, and when the computer executable instructions are executed by the processor, the processor is configured to perform:
entering a pre-established new data analysis and processing project;
accessing a functional node in the new data analysis and processing project;
reading a target file and importing data;
generating a data calculation and processing script according to a requirement information; and
calling the data calculation and processing script, and analyzing and processing the data at the functional node.

One or more non-volatile computer readable storage medium containing computer executable instructions, wherein, when the computer executable instructions are executed by one or more processors, the one or more processors are configured to perform:
entering a pre-established new data analysis and processing project;
accessing a functional node in the new data analysis and processing project;
reading a target file and importing data;
generating a data calculation and processing script according to a requirement information; and
calling the data calculation and processing script, and analyzing and processing the data at the functional node.

The details of one or more embodiment of the present disclosure will be described in the following drawings and description. And the other technical features, objectives and advantages can be more clearly according to the specification, drawings and claims of the present disclosure.

### BRIEF DESCRIPTION OF THE DRAWINGS

In order to make the technical solutions of the present disclosure or the prior art to be understood more clearly, the involved figures in the present disclosure or the prior art will be described as follows. It should be understood that the figures described herein are merely some embodiments of the present disclosure, one of ordinary skill in the art can obtain other figures according to the following described figures, without paying any creative efforts.
FIG. 1 is a block diagram illustrating a computing device according to an embodiment of the present disclosure;
FIG. 2 is a flow chart illustrating a method for data analyzing and processing according to an embodiment of the present disclosure;
FIG.3 is a flow chart illustrating a method for establishing a new data analysis and processing project according to an embodiment of the present disclosure;
FIG.4 is a flow chart illustrating a method for generating a data diagram according to an embodiment of the present disclosure;
FIG.5 is a functional block diagram illustrating an apparatus for data analyzing and processing according to an embodiment of the present disclosure;
FIG.6 is a functional block diagram illustrating an apparatus for data analyzing and processing according to another embodiment of the present disclosure;
FIG.7 is a functional block diagram illustrating an establishing module according to an embodiment of the present disclosure;
FIG.8 is a functional block diagram illustrating an apparatus for data analyzing and processing according to another embodiment of the present disclosure.

### DETAILED DESCRIPTION

In order to make the purpose, technical solutions, and advantages of the present disclosure to be understood more clearly, the present disclosure will be described in further details with the accompanying drawings and the following embodiments. It should be understood that the specific embodiments described herein are merely examples to illustrate the disclosure, not to limit the present disclosure.

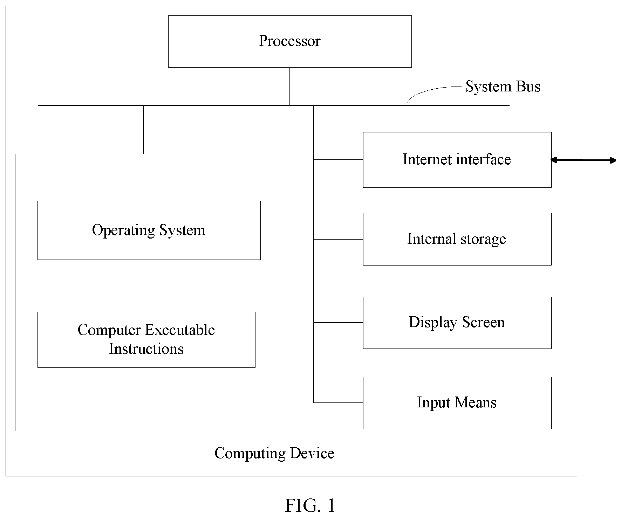

FIG. 1 is a block diagram illustrating a computing device according to one embodiment of the present disclosure. As shown in FIG.1, the computing device includes a processor, and a non-volatile storage medium, an internal storage, an internet interface, a display screen and an input means, which are connected with the processor through a system bus. Wherein, the non-volatile storage medium of the computing device includes an operating system and computer executable instructions, the computer executable instructions are used for performing the method for data analyzing and processing, which is implemented in the computing device of the present disclosure. The processor provides computing and controlling capability, and supports the operation of the computing device. The internal storage of the computing device can provide an operation environment for the operation system and the computer executable instructions in the non-volatile storage medium. The internet interface is used for communicating with other computing devices, such as sending the data having been processed to a server to store.

The computing device may include a user interaction means, the user interaction means includes an input means and an output means. In one embodiment, the output means may be the display screen of the computing device, and may be configured to display the data information. Wherein, the display screen may be a liquid crystal display or an electronic ink display and so on. The input means is configured to input the data, wherein the input means maybe a touch overlay covered on the display screen, and also may be a key, a trackball or a touch panel disposed on the shell of the computing device, and the input means also may be an external keyboard, a touch panel or a mouse and so on. The computing device can be a mobile phone, a tablet computer, a personal computer and other terminals, and the computing device also may be a server and so on. It should be understood by one of ordinary skill in the art that the structure shown in FIG.1, is merely the block diagram of the structure related to the present disclosure, not to limit the computing device performed the present technical solution. The specific computing device may include more or less components than the components as shown, or may be a combination of some components, or may have different layout of the components.

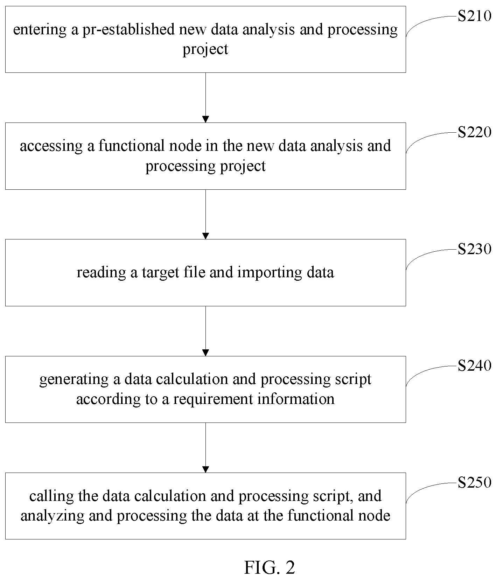

As shown in FIG.2, in one embodiment, a method for analyzing and processing data is provided, and the method can be implemented in the computing device as shown in FIG.1, the method includes steps as follows.

Step 210, entering a pre-established new data analysis and processing project.

In one embodiment, the new data analysis and processing project is a new project, which is established by integrating the scientific computing into the ETL (Extract-Transform-Load) tool. The ETL tool is used for extracting the data from the distributed heterogeneous data sources such as relationship data and flat data files, into a temporary intermediate layer. And then the ETL tool can be used for cleaning, transforming and integrating the data, finally, loading the data into a data warehouse or a data market. The data can be the basis of online analytical processing and data mining. The common ETL tools may include Datastage®, Kettle® and OWB® (Oracle Warehouse Builder) and so on. Wherein, Datastage® is a data integration software platform, and it has functionality, flexibility and scalability, which can meet the demand of harsh data integration. Kettle® is an open-source ETL tool written entirely in Java, and can be running under Windows, Linux and Unix. Kettle® is mainly configured to extract the data, and it has high efficiency and stability. OWB® is an integrated tool of Oracle, and it is used for managing the whole life cycle of ETL, the entirely integrated relationship, the dimensional modeling, the data quality, the data auditing, the data and metadata. In this embodiment, the function of scientific computing of python can be integrated into Kettle of the ETL tool. Wherein, python is an object-oriented and interpreted computer programming language, python has abundant extension databases, and it is able to perform the scientific computing on data, and python helps to accomplish various advanced analysis and processing tasks. The scientific computing is a numerical value computation using computer to solve the mathematical problem in science and engineering, and the scientific computing mainly includes three stages: establishing mathematical models, establishing a computation method for solving, and processing by the computer. And the common scientific computing language and software includes FORTRANALGOL®, MATLAB®. It should be understood that other computing program language having the function of scientific computing may be integrated into the ETL tool, not to limit as these.

Step 220, accessing a functional node in the new data analysis and processing project.

In one embodiment, the scientific computing of python is integrated into Kettle, and the functional node is developed and generated. The functional node can provide various functions of scientific computing such as executing python code, or invoking the scientific computing extension database of python to perform data analyzing and computing. The scientific computing extension database of python may include NumPy, ScriPy, Matplotlib and so on, which are used for providing the functions of fast array processing, numerical value calculating and drawing respectively. When accessing the functional node in the new data analysis and processing project, the numerous of functions of scientific computing in the functional node can be performed.

Step 230, reading a target file and importing a data.

In one embodiment, the target file may be stored in a local server cluster, or a server cluster of a distributed storage system. After accessing the functional node, the necessary target files can be selected from the local server cluster or the server cluster of the distributed storage system, and then the target files can be read, and the data needed to be processed can be imported.

Step 240, generating a data calculation and processing script according to the requirement information.

In one embodiment, the requirement information is a necessary analysis and processing requirement related to the data, such as the requirement of processing the array of the data by calling a vector processing function in the extension database of NumPy, or the requirement of processing the imported data in batches. Hence, by generating the corresponding data calculation and processing script in python according to different requirement information, and saving the generated data calculation and processing script, the next data processing can perform the generated data calculation and processing script directly without the need of generating a new script.

Step 250, calling the data calculation and processing script, and analyzing and processing the data at the functional node.

In one embodiment, at the functional node, the data calculation and processing script in python generated according to the requirement information can be executed directly, and then the data can be analyzed and processed according to the data calculation and processing script in python. For example, the operations such as data extracting, data cleaning, data transforming and data calculating can be performed at the functional node. Wherein, the data cleaning is a process for re-examining and verifying data, in order to delete the redundant information, and to correct the existing error, and to ensure the consistency of the data. The data transforming is a process for transforming the data from one pattern into another pattern. The operations of performing scientific computing on data, by way of calling the functions in the scientific computing extension database through the data calculation and processing script in python, can be achieved at the functional node. In other embodiments, the script files having target suffix can be read directly at the functional node, such as the script file whose suffix is .py can be read directly.

The above-mentioned method for data analyzing and processing, by accessing the functional node in the new data analysis and processing project, and after reading the target files and importing data, then processing the data by calling the data calculation and processing script generated according to the requirement information, the data calculation and processing script can be executed to analyze, and the complicated data can be processed. Moreover, all of the data are processed at the functional node, thus there is no need to transform the data among a plurality of nodes, the data processing becomes simple, and the efficiency of data processing is improved.

In one embodiment, before the step 210, entering a pre-established new data analysis and processing project, the method further includes the step of establishing the new data analysis and processing project.

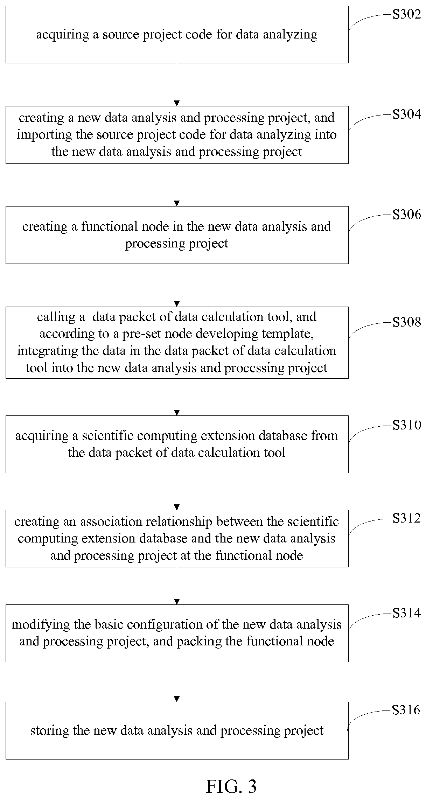

As shown in FIG.3, in one embodiment, the step of establishing the new data analysis and processing project further includes the steps:
Step 302, acquiring the source project code for data analyzing.

In one embodiment, the source project code for data analyzing is the source project code of the ETL tool, such as the source project code of Kettle and so on. After acquiring the source project code for data analyzing, the acquired source project code for data analyzing can be decompressed, and then the corresponding project files can be obtained.

Step 304, creating a new data analysis and processing project, and importing the source project code for data analyzing into the new data analysis and processing project.

In one embodiment, the source project code for data analyzing can be imported as a new project under a developing environment such as Eclipse, that is, the new project created under the developing environment such as Eclipse, serves as the new data analysis and processing project. The ETL tool acquired by decompressing such as the source project code of Kettle, can be imported into the new data analysis and processing project.

Step 306, creating a functional node in the new data analysis and processing project.

In one embodiment, the functional node can be created in the new data analysis and processing project, and the functional node can be developed based on the multiple interfaces provided by Kettle tool. For example, the functional interface of the functional node can be achieved though the TemplateStepDialog. The step of creating a functional node in the new data analysis and processing project can be equal to the step of re-creating a new flow processing node in the original flow processing nodes of Kettle tool. The functional node can be seen as a new developed plug-in of the Kettle tool, and the re-created and developed functional node is mainly used for the data involved scientific computing or complicated analyzing.

Step 308, calling a data packet of data calculation tool, and integrating the data in the data packet of data calculation tool into the new data analysis and processing project according to a pre-set node developing template.

In one embodiment, the data packet of data calculation tool may include the python code, and the abundant self-contained extension data packets in python, for example, the data packets of the scientific computing extension database such as NumPy, ScriPy and Matplotlib. On the basis of the plug-in node developing of the source code in the Kettletool, according to the original templates of the node developing in Kettle, integrating the data packet of data calculation tool into the new data analysis and processing project can be achieved. And the functions of editing the functional nodes, executing and storing the data calculation and processing script of the phython, by using the four types of template in Kettle can be achieved. Wherein, the four types of template include TemplateStep type, TemplateStepData type, TemplateStepMeta type and TemplateStepDialog type. The different interfaces are available for different types of template, and it is available to call the data integrated into the data packet of data calculation tool through each interface, so that the functional node has the function of editing, executing and storing the data calculation and processing script of the python.

Step 310, acquiring a scientific computing extension database from the data packet of data calculation tool.

In one embodiment, the data packet of data calculation tool may include the data of the scientific computing extension database such as NumPy, ScriPy and Matplotlib. Wherein, NumPy is used for storing and processing large matrices. ScriPy is used for capturing Web site, and extracting the structural data from the pages. Matplotlib is used for generating the diagram. As compared with other scientific computing software or languages, scientific computing of the python has abundant extension database, and all of the extension databases are open source. Python can provide various of call interfaces for analyzing and processing data, whose language is more readable, and is more likely to maintain, and python can also achieve the advanced task of data processing easily.

Step 312, creating an association relationship between the scientific computing extension database and the new data analysis and processing project at the functional node.

In one embodiment, the association relationship between the new data analysis and processing project and the scientific computing extension database, such as NumPy,ScriPy and Matplotlib, can be created at the functional node. By performing the data calculation and processing script of the python, and invoking corresponding call interface provided by the python at the functional node, the function of scientific computing in the scientific computing extension database is available for analyzing and processing the data.

Step 314, modifying the basic configuration of the new data analysis and processing project, and packing the functional node.

In one embodiment, the basic configuration of the new data analysis and processing project can be modified at the configuration files such as plugin.xml. For example, the modification may be an operation of adding the corresponding names and description of the functional node, but not to limit as these. After modifying the basic configuration, then the functional node can be packed and then stored in the plug-in files of Kettle.

Step 316, storing the new data analysis and processing project.

In one embodiment, after developing the functional node in the new data analysis and processing project, the new data analysis and processing project may be stored into a local server cluster, or a sever cluster of the distributed storage system. At the local server cluster or the sever cluster of the distributed storage system, a plurality of data can be processed parallel by using the new data analysis and processing project, thus the efficiency of the data processing is improved.

In this embodiment, by creating and developing functional node in the new data analysis and processing project, the functional node is able to provide functions of editing, executing and storing the data calculation and processing script. And calling the scientific computing extension database to process the complicated data can be performed at the functional node. By integrating the scientific computing into the ETL data analysis tool, the ETL data analysis tool can process more complicated data ina simple way, and the efficiency of data processing is improved.

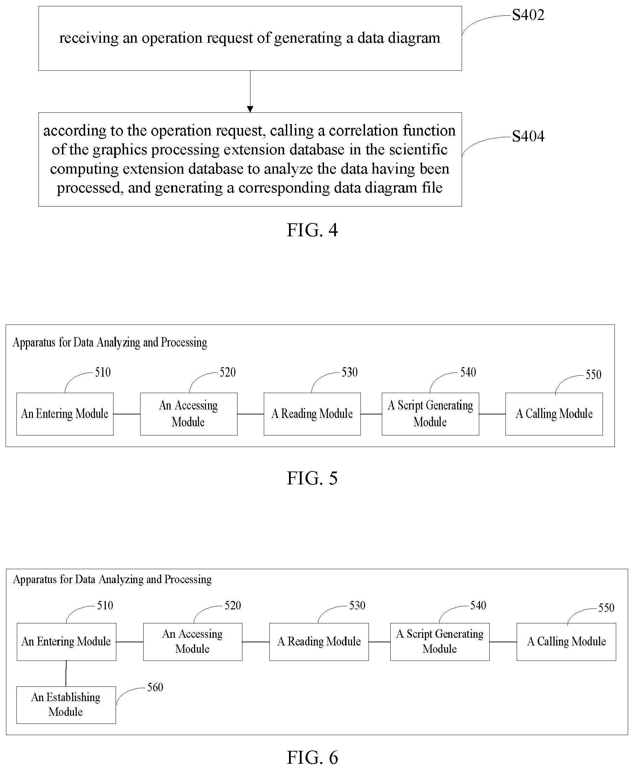

As shown in FIG.4, in one embodiment, after the step 250, calling the data calculation and processing script, and analyzing and processing the data at the functional node, the method further includes the steps:
Step 402, receiving an operation request of generating a data diagram.

In one embodiment, a button for generating the data diagram may be formed in the functional node of the new data analysis and processing project. When the button is clicked by the user, the operation request of generating the data diagram can be received.

Step 404, according to the operation request, calling the correlation function of the graphics processing extension database in the scientific computing extension database to analyze the data having been processed, and generating a corresponding data diagram file.

In one embodiment, the corresponding interfaces of the data calculation and processing script of the python are available for calling, and the correlation functions in the graphics processing extension database of the scientific computing extension database such as Matplotlib, can be used for analyzing the data having been processed. And then the corresponding graph or tables can be generated, so that to provide a visual representation. Thus the user can learn the analysis results of the data visually. The generated data diagram files may be stored in a local server cluster, or a server cluster of the distributed storage system. And the burden of the local server can be reduced, when the data diagram files are stored in the server cluster of the distributed storage system.

In this embodiment, the correlation functions of the graphics processing extension database in the scientific computing extension database is available to analyze the data having been processed, thus the data having been processed can be displayed in a graph or table pattern, and the data analyzing and processing results can be more intuitive.

In one embodiment, the method for data analyzing and processing further includes the step of acquiring the nearest Hadoop cluster, and storing the data having been processed into the nearest Hadoop cluster.

In one embodiment, hapoop distributed file system (Hapoop, HDFS) is a distributed file storage system, and the hapoop distributed file system has high fault tolerance, and is able to provide high throughput for accessing the data of application program, which is suitable for the application program having large data sets. By acquiring the Hadoop cluster,which is closest to the current computing device used for analyzing and processing data, and storing the data having been processed and the diagram files into the nearest Hadoop cluster, the internet transmission consumption can be reduced, and the network source can be saved.

In this embodiment, the data can be stored in the nearest Hadoop cluster, the internet transmission consumption can be reduced, and the network source can be saved.

As shown in FIG.5, in one embodiment, an apparatus for data analyzing and processing includes an entering module 510, an accessing module 520, a reading module 530, a script generating module 540, and a calling module 550.

The entering module 510 is configured to enter a pre-established new data analysis and processing project.

In one embodiment, the new data analysis and processing project is a new project, which is established by integrating the scientific computing into the Extract-Transform-Load (ETL) tool. The ETL tool is used for extracting the data from the distributed heterogeneous data sources, such as relationship data and flat data files, into a temporary intermediate layer. And then the ETL tool is used for cleaning, transforming and integrating the data, finally, loading the data into a data warehouse or a data market. The data can be the basis of online analytical processing and data mining. The common ETL tools may include Datastage®, Kettle® and OWB® (Oracle Warehouse Builder) and so on. Wherein, Datastage® is a data integration software platform, and it has functionality, flexibility and scalability, which can meet the demand of harsh data integration. Kettle® is an open-source ETL tool written entirely in Java, and can be running under Windows, Linux and Unix. Kettle® is mainly configured to extract the data, and it has high efficiency and stability. OWB® is an integrated tool of Oracle, and it is used for managing the whole life cycle of ETL, the entirely integrated relationship, the dimensional modeling, the data quality, the data auditing, the data and metadata. In this embodiment, the function of scientific computing of python can be integrated into Kettle of the ETL tool. Wherein, python is an object-oriented and interpreted computer programming language, python has abundant extension databases, and is able to perform the scientific computing on data, and python helps to accomplish various advanced analysis and processing tasks. The scientific computing is a numerical value computation using computer to solve the mathematical problem in science and engineering, and the scientific computing mainly includes three stages: establishing mathematical models, establishing a computation method for solving, and processing by the computer. And the common scientific computing language and software includes FORTRANALGOL®, MATLAB®. It should be understood that other computing program language having the function of scientific computing may be integrated into the ETL tool, not to limit as these.

The accessing module 520 is configured to access a functional node in the new data analysis and processing project.

In one embodiment, the scientific computing of python is integrated into Kettle, and the functional node is developed and generated. The functional node can provide various functions of scientific computing such as executing python code, or invoking the scientific computing extension database of python to perform data analyzing and computing. The scientific computing extension database of python may include NumPy, ScriPy, Matplotlib and so on, which are used for providing the functions of fast array processing, numerical value calculating and drawing respectively. When accessing the functional node in the new data analysis and processing project, the numerous of functions of scientific computing in the functional node can be performed.

The reading module 530 is configured to read a target file and importing data.

In one embodiment, the target file may be stored in a local server cluster, or a server cluster of a distributed storage system. After accessing the functional node, the necessary target files can be selected from the local server cluster or the server cluster of the distributed storage system, and then the target files can be read, and the data needed to be processed can be imported.

The script generating module 540 is configured to generate a data calculation and processing script according to the requirement information.

In one embodiment, the requirement information is a necessary analysis and processing requirement related to the data, such as the requirement of processing the array of the data by calling a vector processing function in the extension database of NumPy, or the requirement of processing the imported data in batches. Hence, by generating the corresponding data calculation and processing script in python according to different requirement information, and saving the generated data calculation and processing script, the next data processing can perform the generated data calculation and processing script directly without the need of generating a new script.

The calling module 550 is configured to call the data calculation and processing script, and analyze and process the data at the functional node.

In one embodiment, at the functional node, the data calculation and processing script in python generated according to the requirement information, can be executed directly, and then the data can be analyzed and processed according to the data calculation and processing script in python. For example, the operations such as data extracting, data cleaning, data transforming and data calculating can be performed at the functional node. Wherein, the data cleaning is a process for re-examining and verifying data, in order to delete the redundant information, and to correct the existing error, and to ensure the consistency of the data. The data transforming is a process for transforming the data from one pattern into another pattern. The operations of performing scientific computing on data, by way of calling the functions in the scientific computing extension database through the data calculation and processing script in python, can be achieved at the functional node. In other embodiments, the script files having target suffix can be read directly at the functional node, such as the script file whose suffix is .py can be read directly.

The above-mentioned apparatus for data analyzing and processing, by accessing the functional node in the new data analysis and processing project, and after reading the target files and importing data, then processing the data by calling the data calculation and processing script generated according to the requirement information, the data calculation and processing script can be executed to analyze, and the complicated data can be processed. Moreover, all of the data are processed at the functional node, thus there is no need to transform the data among a plurality of nodes, the data processing becomes simple, and the efficiency of data processing is improved.

As shown in FIG.6, in another embodiment, except the entering module 510, the accessing module 520, the reading module 530, the script generating module 540 and the calling module 550, the above apparatus for data analyzing and processing further includes an establishing module 560.

The establishing module 560 is configured to establish a new data analysis and processing project.

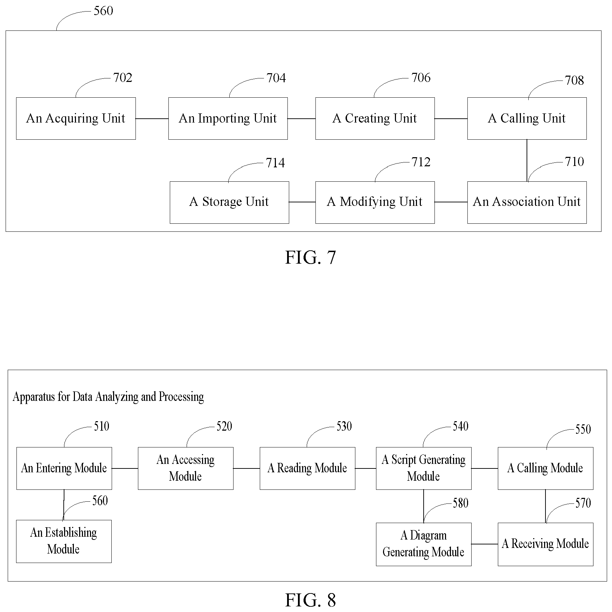

As shown in FIG.7, in one embodiment, the establishing module 560 includes an acquiring unit 702, an importing unit 704, a creating unit 706, a calling unit 708, an association unit 710, a modifying unit712 and a storing unit 714.

The acquiring unit 702is configured to acquire a source project code for data analyzing.

In one embodiment, the source project code for data analyzing is the source project code of the ETL tool, such as the source project code of Kettle and so on. After acquiring the source project code for data analyzing, the acquired source project code for data analyzing can be decompressed, and then the corresponding project files can be obtained.

The importing unit 704is configured to create a new data analysis and processing project, and import the source project code for data analyzing into the new data analysis and processing project.

In one embodiment, the source project code for data analyzing can be imported as a new project under a developing environment such as Eclipse, that is, the new project created under the developing environment such as Eclipse, serves as the new data analysis and processing project. The ETL tool acquired by decompressing such as the source project code of Kettle, can be imported into the new data analysis and processing project.

The creating unit 706 is configured to create a functional node in the new data analysis and processing project.

In one embodiment, the functional node can be created in the new data analysis and processing project, and the functional node can be developed based on the multiple interfaces provided by Kettle tool. For example, the functional interface of the functional node can be achieved though the TemplateStepDialog. The step of creating a functional node in the new data analysis and processing project can be equal to the step of re-creating a new flow processing node in the original flow processing nodes of Kettle tool. The functional node can be seen as a new developed plug-in of the Kettle tool, and the re-created and developed functional node is mainly used for the data involved scientific computing or complicated analyzing.

The calling unit 708 is configured to call a data packet of data calculation tool, and integrate the data in the data packet of data calculation tool into the new data analysis and processing project according to a pre-set node developing template.

In one embodiment, the data packet of data calculation tool may include the python code, and the abundant self-contained extension data packets in python, for example, the data packets of the scientific computing extension database such as NumPy, ScriPy and Matplotlib. On the basis of the plug-in node developing of the source code in the Kettle tool, according to the original templates of the node developing in Kettle, integrating the data packet of data calculation tool into the new data analysis and processing project can be achieved. And the functions of editing the functional nodes, executing and storing the data calculation and processing script of the phython, by using the four types of template in Kettle can be achieved. Wherein, the four types of template include TemplateStep type, TemplateStepData type, TemplateStepMeta type and TemplateStepDialog type. The different interfaces are available for different type of template, and it is available to call the data integrated into the data packet of data calculation tool through each connector, so that the functional node has the function of editing, executing and storing the data calculation and processing script of the python.

The acquiring unit 702 is also configured to acquire a scientific computing extension database from the data packet of data calculation tool.

In one embodiment, the data packet of data calculation tool may include the data of the scientific computing extension database such as NumPy, ScriPy and Matplotlib. Wherein, NumPy is used for storing and processing large matrices. ScriPy is used for capturing Web site, and extracting the structural data from the pages. Matplotlib is used for generating the diagram. As compared with other scientific computing software or languages, scientific computing of the python has abundant extension database, and all of the extension databases are open source. Python can provide various of call interfaces for analyzing and processing data, whose language is more readable, and is more likely to maintain, and python can also achieve the advanced task of data processing easily.

The association unit 710 is configured to create an association relationship between the scientific computing extension database and the new data analysis and processing project at the functional node.

In one embodiment, the association relationship between the new data analysis and processing project and the scientific computing extension database, such as NumPy, ScriPy and Matplotlib, can be created at the functional node. By performing the data calculation and processing script of the python, and invoking corresponding call interface provided by the python at the functional node, the function of scientific computing in the scientific computing extension database is available for analyzing and processing the data.

The modifying unit 712 is configured to modify the basic configuration of the new data analysis and processing project, and pack the functional node.

In one embodiment, the basic configuration of the new data analysis and processing project can be modified at the configuration files such as plugin.xml. For example, the modification may be an operation of adding the corresponding names and description of the functional node, but not to limit as these. After modifying the basic configuration, then the functional node can be packed and then stored in the plug-in files of Kettle.

The storage unit 714 is configured to store the new data analysis and processing project.

In one embodiment, after developing the functional node in the new data analysis and processing project, the new data analysis and processing project may be stored into a local server cluster, or a sever cluster of the distributed storage system. At the local server cluster or the sever cluster of the distributed storage system, a plurality of data can be processed parallel by using the new data analysis and processing project, thus the efficiency of the data processing is improved.

In this embodiment, by creating and developing functional node in the new data analysis and processing project, the functional node is able to provide functions of editing, executing and storing the data calculation and processing script. And calling the scientific computing extension database to process the complicated data can be performed at the functional node. By integrating the scientific computing into the ETL data analysis tool, the ETL data analysis tool can process more complicated data in a simple way, and the efficiency of data processing is improved.

As shown in FIG.8, in one embodiment, except the entering module 510, the accessing module 520, the reading module 530, the script generating module 540, the calling module 550 and the establishing module 560, the above apparatus for data analyzing and processing further includes a receiving module 570 and a diagram generating module 580.

The receiving module 570 is configured to receive an operation request of generating a data diagram.

In one embodiment, a button for generating the data diagram may be formed in the functional node of the new data analysis and processing project. When the button is clicked by the user, the operation request of generating the data diagram can be received.

The diagram generating module 580 is configured to, according to the operation request, call a correlation function of the graphics processing extension database in the scientific computing extension database to analyze the data having been processed, and generate a corresponding data diagram file.

In one embodiment, the corresponding interfaces of the data calculation and processing script of the python are available for calling, and the correlation functions in the graphics processing extension database of the scientific computing extension database such as Matplotlib, can be used for analyzing the data having been processed. And then the corresponding graph or tables can be generated, so that to provide a visual representation. Thus the user can learn the analysis results of the data visually. The generated data diagram files may be stored in a local server cluster, or a server cluster of the distributed storage system. And the burden of the local server can be reduced, when the data diagram files are stored in the server cluster of the distributed storage system.

In this embodiment, the correlation functions of the graphics processing extension database in the scientific computing extension database is available to analyze the data having been processed, thus the data having been processed can be displayed in a graph or table pattern, and the data analyzing and processing results can be more intuitive.

In one embodiment, the apparatus further includes a storage module. The storage moduleis configured to acquire a nearest Hadoop cluster, and store the data having been processed into the nearest Hadoop cluster.

In one embodiment, hapoop distributed file system (Hapoop,HDFS) is a distributed file storage system, and the hapoop distributed file system has high fault tolerance, and is able to provide high throughput for accessing the data of application program, which is suitable for the application program having large data sets. By acquiring the Hadoop cluster, which is closest to the current computing device used for analyzing and processing data, and storing the data having been processed and the diagram files into the nearest Hadoop cluster, the internet transmission consumption can be reduced, and the network source can be saved.

In this embodiment, the data can be stored in the nearest Hadoop cluster, the internet transmission consumption can be reduced, and the network source can be saved.

All or part of each module of the apparatus for data analyzing and processing, maybe realized in software, in hardware or the combination of thereof. For example, when realized in hardware, the function of the calling module 550 may be achieved by the processor of the computing device, which can use the functional node to invoke the data calculation and processing script, and then to analyze and process the data. Wherein, the processor may be a central processing unit (CPU)or a Microprocessor etc. The storage module can send the data having been processed and the generated diagram files to the nearest Hadoop cluster by the internet interface, and it can store the data having been processed and the generated diagram files into the nearest Hadoop cluster. Wherein, the internet interface may be an ethernet card or a wireless network card and so on. Each of the above-mentioned modules may be embedded into the processor of the computing device in hardware, or may be independent of the processor of the computing device. And each of the above-mentioned modules may also store into the memory of the computing device in software, in order that the processor can invoke the corresponding operations of each module.

It should be understood by those skilled in the art that all or part of the processes of preferred embodiments disclosed above may be realized through relevant hardware commanded by computer program instructions. Said program may be saved in a computer readable storage medium, and said program may include the processes of the preferred embodiments mentioned above when it is executed. Wherein, said storage medium may be a diskette, optical disk, read-only memory (ROM) or random access memory (RAM), and so on.

While various embodiments are discussed therein specifically, it will be understood that they are not intended to limit to these embodiments. It should be understood by those skilled in the art that various modifications and replacements may be made therein without departing from the theory of the present disclosure, which should also be seen in the scope of the present disclosure. The scope of the present disclosure should be defined by the appended claims.

## Claims

1. A method for data analyzing and processing, comprising:
entering a pre-established new data analysis and processing project;
accessing a functional node in the new data analysis and processing project;
reading a target file and importing a data;
generating a data calculation and processing script according to a requirement information; and
calling the data calculation and processing script, and analyzing and processing the data at the functional node.

2. The method of claim 1, before the entering the pre-established new data analysis and processing project, further comprising establishing a new data analysis and processing project;
wherein the step of establishing a new data analysis and processing project includes:
acquiring a source project code for data analyzing;
creating a new data analysis and processing project, and importing the source project code for data analyzing into the new data analysis and processing project;
creating a functional node in the new data analysis and processing project;
calling a data packet of data calculation tool, and integrating the data in the data packet of data calculation tool into the new data analysis and processing project according to a pre-set node developing template; and
storing the new data analysis and processing project.

3. The method of claim 2, before the step of storing the new data analysis and processing project, further comprising:
acquiring a scientific computing extension database from the data packet of data calculation tool;
creating an association relationship between the scientific computing extension database and the new data analysis and processing project at the functional node; and
modifying the basic configuration of the new data analysis and processing project, and packing the functional node.

4. The method of claim 3, after the calling the data calculation and processing script, and analyzing and processing the data at the functional node, further comprising:
receiving an operation request of generating a data diagram;
according to the operation request, calling a correlation function of the graphics processing extension database in the scientific computing extension database to analyze the data having been processed, and generating a corresponding data diagram file.

5. The method of claim 1 further comprising:
acquiring a nearest Hadoop cluster, and storing the data having been processed into the nearest Hadoop cluster.

6. An apparatus for data analyzing and processing, comprising:
an entering module configured to enter a pre-established new data analysis and processing project;
an accessing module configured to access a functional node in the new data analysis and processing project;
a reading module configured to read a target file and import a data;
a script generating module configured to generate a data calculation and processing script according to a requirement information; and
a calling module configured to call the data calculation and processing script, and analyze and process the data at the functional node.

7. The apparatus of claim 6 further comprising:
an establishing module configured to establish a new data analysis and processing project;
wherein the establishing module includes:
an acquiring unit configured to acquire a source project code for data analyzing;
an importing unit configured to create a new data analysis and processing project, and import the source project code for data analyzing into the new data analysis and processing project;
a creating unit configured to create a functional node in the new data analysis and processing project;
a calling unit configured to call a data packet of data calculation tool, and integrate the data in the data packet of data calculation tool into the new data analysis and processing project according to a pre-set node developing template; and
a storage unit configured to store the new data analysis and processing project.

8. The apparatus of claim 7, wherein the acquiring unit is also configured to acquire a scientific computing extension database from the data packet of data calculation tool;
the establishing module further includes:
an association unit configured to create an association relationship between the scientific computing extension database and the new data analysis and processing project at the functional node; and
a modifying unit configured to modify the basic configuration of the new data analysis and processing project, and pack the functional node.

9. The apparatus of claim 8 further comprising:
a receiving module configured to receive an operation request of generating a data diagram; and
a diagram generating module configured to, according to the operation request, call a correlation function of the graphics processing extension database in the scientific computing extension database to analyze the data having been processed, and generate a corresponding data diagram file.

10. The apparatus of claim 6 further comprising:
a storage module configured to acquire a nearest Hadoop cluster and store the data having been processed into the nearest Hadoop cluster.

11. A computing device, comprising a memory and a processor, wherein computer executable instructions are stored in the memory, and when the computer executable instructions are executed by the processor, the processor is configured to perform:
entering a pre-established new data analysis and processing project;
accessing a functional node in the new data analysis and processing project;
reading a target file and importing a data;
generating a data calculation and processing script according to a requirement information; and
calling the data calculation and processing script, and analyzing and processing the data at the functional node.

12. The computing device of claim 11, wherein when the computer executable instructions are executed by the processor, before the step of entering a pre-established new data analysis and processing project is performed by the processor, the processor is further configured to perform a step of establishing a new data analysis and processing project;
the step of establishing a new data analysis and processing project includes:
acquiring a source project code for data analyzing;
creating a new data analysis and processing project, and importing the source project code for data analyzing into the new data analysis and processing project;
creating a functional node in the new data analysis and processing project;
calling a data packet of data calculation tool, and according to a pre-set node developing template, integrating the data in the data packet of data calculation tool into the new data analysis and processing project; and
storing the new data analysis and processing project.

13. The computing device of claim 12, wherein when the computer executable instructions are executed by the processor, the processor is further configured to perform following steps before the storing the new data analysis and processing project:
acquiring a scientific computing extension database from the data packet of data calculation tool;
creating an association relationship between the scientific computing extension database and the new data analysis and processing project at the functional node; and
modifying the basic configuration of the new data analysis and processing project, and packing the functional node.

14. The computing device of claim 13, wherein when the computer executable instructions are executed by the processor, the processor is further configured to perform following steps after the calling the data calculation and processing script at the functional node, and analyzing and processing the data:
receiving an operation request of generating a data diagram; and
according to the operation request, calling a correlation function of the graphics processing extension database in the scientific computing extension database to analyze the data having been processed, and generating a corresponding data diagram file.

15. The computing device of claim 11, wherein when the computer executable instructions are executed by the processor, the processor is further configured to perform:
acquiring a nearest Hadoop cluster, and storing the data having been processed into the nearest Hadoop cluster.

16. One or more non-volatile computer readable storage medium containing computer executable instructions, wherein when the computer executable instructions are executed by one or more processors, the one or more processors are configured to perform:
entering a pre-established new data analysis and processing project;
accessing a functional node in the new data analysis and processing project;
reading a target file and importing a data;
generating a data calculation and processing script according to a requirement information; and
calling the data calculation and processing script, and analyzing and processing the data at the functional node.

17. The non-volatile computer readable storage medium of claim 16, wherein when the computer executable instructions are executed by one or more processor, before the entering a pre-established new data analysis and processing project, the one or more processors are configured to perform a step of establishing a new data analysis and processing project;
the establishing the new data analysis and processing project includes:
acquiring a source project code for data analyzing;
creating a new data analysis and processing project, and importing the source project code for data analyzing into the new data analysis and processing project;
creating a functional node in the new data analysis and processing project;
calling a data packet of data calculation tool, and according to a pre-set node developing template, integrating the data in the data packet of data calculation tool into the new data analysis and processing project; and
storing the new data analysis and processing project.

18. The non-volatile computer readable storage medium of claim 17, wherein when the computer executable instructions are executed by the one or more processors, the one or more processors are configured to perform following steps before the storing the new data analysis and processing project:
acquiring a scientific computing extension database from the data packet of data calculation tool;
creating an association relationship between the scientific computing extension database and the new data analysis and processing project at the functional node; and
modifying the basic configuration of the new data analysis and processing project, and packing the functional node.

19. The non-volatile computer readable storage medium of claim 18, wherein when the computer executable instructions are executed by the one or more processors, the one or more processors are configured to perform following steps after the calling the data calculation and processing script at the functional node, and analyzing and processing the data:
receiving an operation request of generating a data diagram;
according to the operation request, calling a correlation function of the graphics processing extension database in the scientific computing extension database to analyze the data having been processed, and generating a corresponding data diagram file.

20. The non-volatile computer readable storage medium of claim 16, wherein when the computer executable instructions are executed by the one or more processors, the one or more processors are configured to perform:
acquiring a nearest Hadoop cluster, and storing the data having been processed into the nearest Hadoop cluster.
